Europäisches Patentamt

(19) European Patent Office

Office européen des brevets

(11) Publication number: **0 236 761**
**A1**

(12) # EUROPEAN PATENT APPLICATION

(21) Application number: **87101799.2**

(22) Date of filing: **10.02.87**

(51) Int. Cl.³: **G 01 S 17/10**
**G 01 S 17/50, G 01 S 7/48**
**H 01 S 3/097, H 01 S 3/03**

(30) Priority: **13.02.86 IT 4765086**

(43) Date of publication of application:
**16.09.87 Bulletin 87/38**

(84) Designated Contracting States:
**DE FR GB NL SE**

(71) Applicant: SELENIA INDUSTRIE ELETTRONICHE
ASSOCIATE S.p.A.
Via Tiburtina, KM 12.400
I-00131 Roma(IT)

(72) Inventor: Penco, Eugenio
Via Bevignani 12
I-00186 Roma(IT)

(72) Inventor: Marchetti, Renato
via Cartesio 144
I-00137 Roma(IT)

(74) Representative: Gustorf, Gerhard, Dipl.-Ing.
Mühlenstrasse 1
D-8300 Landshut(DE)

(54) **Flight time and heterodyne doppler laser telemetry system.**

(57) Telematric system, consisting of a longitudinal and transversal excitation discharge gas laser (14). The longitudinal excitation between electrodes (4) and (6) provides a long lasting laser pulse (28), suitable for heterodyne or homodyne detection, and the transversal excitation by electrode 8 provides a short laser pulse (28), which is suitable for time of flight telemetry.

FIG. 1

EP 0 236 761 A1

# Flight time and heterodyne doppler laser telemetry system

## Description

This invention relates to a longitudinal and transversal excitation discharge gas laser. It consists of a single tube of isolating material with two electrodes at its ends, while a third electrode is fitted externally and serves also to dissipate the heat generated by the discharge.

This dual discharge system simplifies greatly telemetry systems adopting hybrid or injection type lasers.

The invention finds its best application in the field of telemetry, and more precisely in that of distance measurement, for flight time telemetry and for target speed detection using Doppler telemetry.

Till now, the same problem had been solved adopting different criteria, as by Texas Inc. (US-patent no. 4 405 230), but this solution has the following drawbacks:

a) The laser tube was split into a low pressure and a high pressure section, using three mirrors, with consequential manufacturing difficulties and higher production costs.

b) It was sensitive to vibrations.

The solution presented by this invention eliminates such problems and provides also the following advantages:

a) there is one single laser tube which is not split into high and low pressure sections;

b) the system has two mirrors and is therefore easier to manufacture and therefore also less expensive, as the expert in the field will recognize;

c) the receive-transmit system is coaxial, therefore self aligned;

d) the system is less sensitive to vibrations compared to the invention presented by US patent no. 4 405 230.

The invention will be described in the following with reference to the figures enclosed, but it is not limited to such description.

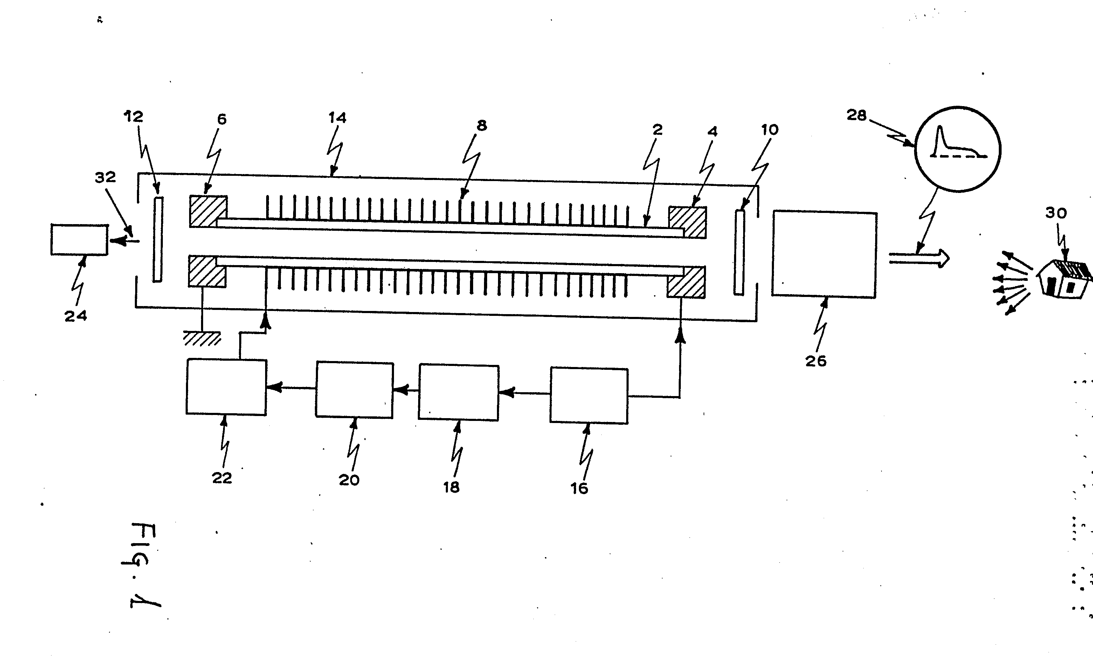

Figure 1 schematic of the laser telemetry system,
Figure 2 shape of the pulse emitted by the laser.

The system consists of a dual discharge laser. The longitudinal discharge is produced by the former 16, and is driven by the rate generator 18. Such generator 18, by means of a delay 20, drives the pulse shaper 22 which supplies a pulsed voltage to electrode 8, fitted to the discharge tube 2. Therefore within discharge tube 2 an axial discharge takes place, driven by shaper 16, between electrodes 4 and 6. The above mentioned generator 18 drives delay 20 which discharges pulse former 22 onto electrode 8, which is capacity coupled through tube 2, made of dielectric material such as alumina or beryllium having high thermal conductivity: electrode 8 is ribbed so as to dissipate the heat generated by the discharge.

The axial discharge between electrodes 4, 6 causes excitation of the gas mix enclosed in the chamber delimited by the tube 2 and by mirrors 10 and 12 which are fitted (as an example only and not limited to such installation) to electrodes 4 and 6. This discharge takes the laser lightly above threshold. The second discharge (capacitive), caused by the circuit made up of 20, 22 and 8 increases rapidly laser gain, and a stimulated emission through so called gain switching takes place: the laser pulse consists of a fast and a slow part, as shown in 28; the slow portion may last a few hundred microseconds, the fast portion typically lasts between 0,1 and 0,2 microsec. The slow pulse may be used to measure the close in speed of a target, in fact F (doppler) = $2v/\lambda$ , where for a 50 m/s speed and a $CO_2$ laser, a $10^7$ Hz frequency results; such frequency may be detected with the homodyne technique. The laser radiation is sent, through suitable optics 26, onto target 30, which reflects a portion of it, collected by optics 26 and sent back to the laser which acts as a homodyne mixer together with detector 24.

The fast portion of pulse 28 determines target distance through flight time measurement.

The optical cavity consists of two optical windows 12 and 10 having reflectivity R such that R(12) is greater than R(10). This way, a portion of the laser radiation is sent to detector 24.

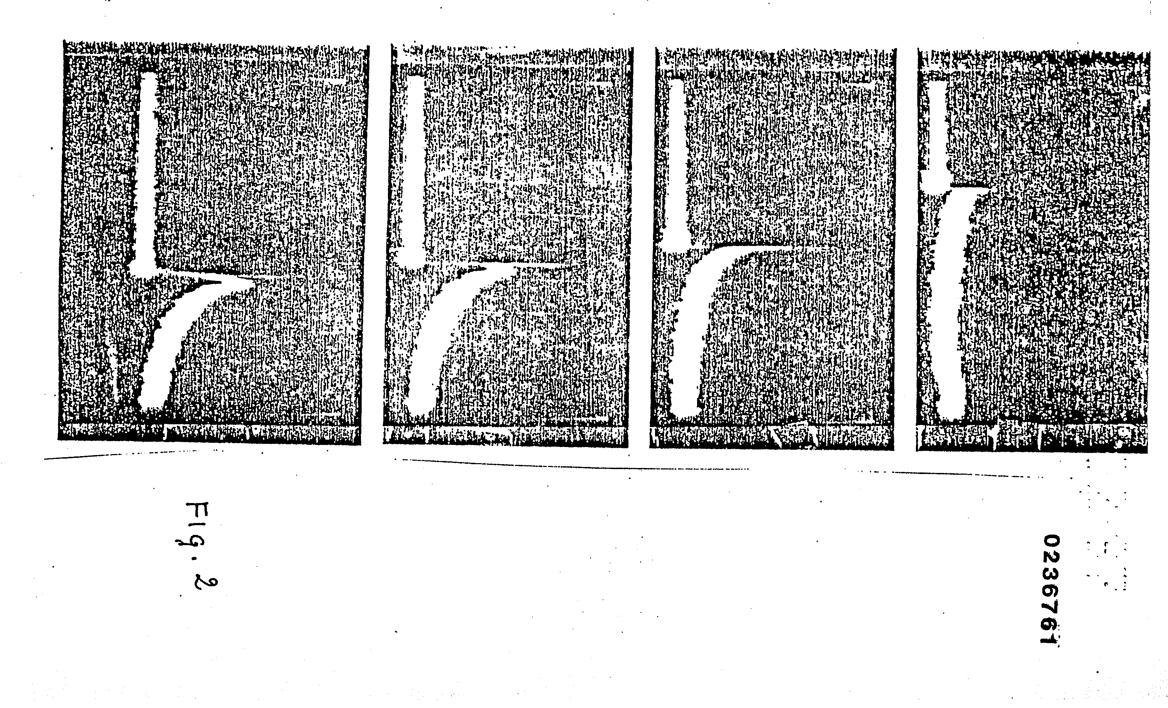

Figure 2 shows the shape of the pulse produced by the laser in question. The different waveshape obtained as a function of delay 20 can clearly be seen (10 μsec/div, external trigger from 18).

## Claims

1. Laser system for time of flight and doppler heterodyne telemetry, which includes a gas laser having axial and radial discharge which gives way through a first type of excitation (longitudinal) to a long lasting laser pulse, suitable for heterodyne or homodyne type of detection, and through a second type of excitation (transversal) to a short laser pulse, suitable for time of flight telemetry.

2. System as claimed in claim 1, wherein the laser consists of a single tube of isolating material with two electrodes at its ends, such laser including a third electrode fitted externally to such isolated tube.

3. System as claimed in claim 2, wherein the two end electrodes are driven to give way to a longitudinal discharge and the third electrode is driven to give way to a transversal discharge.

FIG. 1

0236761

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | PATENT ABSTRACTS OF JAPAN, vol. 7, no. 220 (P-226)[1365], 30th September 1983; & JP-A-58 111 775 (MITSUBISHI DENKI K.K.) 02-07-1983 * Whole abstract * | 1 | G 01 S   17/10 G 01 S   17/50 G 01 S   7/48 H 01 S   3/097 H 01 S   3/03 |
| | --- | | |
| Y | PATENT ABSTRACTS OF JAPAN, vol. 6, no. 12 (E-91)[890], 23rd January 1982; & JP-A-56 134 790 (MITSUBISHI DENKI K.K.) 21-10-1981 * Whole abstract * | 1 | |
| | --- | | |
| A | IDEM | 2,3 | |
| | --- | | |
| A | PATENT ABSTRACTS OF JAPAN, vol. 10, no. 104 (E-397)[2161], 19th April 1986; & JP-A-60 244 086 (MITSUBISHI DENKI K.K.) 03-12-1985 * Abstract; figure * | 1-3 | TECHNICAL FIELDS SEARCHED (Int. Cl.4) G 01 S H 01 S |
| | --- | | |
| A | US-A-4 298 280  (R.C. HARNEY) * Column 2, line 45 -column 3, line 29; figure 3 * | 1-3 | |
| | --- | | |
| D,A | US-A-4 405 230  (C.E. TEW et al.) * Whole document * | 1-3 | |
| | ---                      -/- | | |

The present search report has been drawn up for all claims

| Place of search | Date of completion of the search | Examiner |
|---|---|---|
| THE HAGUE | 07-05-1987 | DEVINE J.J |

**0236761**
Application number

EP 87 10 1799

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | PATENT ABSTRACTS OF JAPAN, vol. 4, no. 24 (E-173), 29th February 1980, page 51 E 173; & JP-A-54 161 964 (MITSUBISHI DENKI K.K.) 22-12-1979 * Whole abstract *<br><br>--- | 1 | |
| A | US-A-4 393 517 (R.G. BUSER et al.)<br><br>----- | | |

TECHNICAL FIELDS SEARCHED (Int. Cl.4)

The present search report has been drawn up for all claims

| Place of search | Date of completion of the search | Examiner |
|---|---|---|
| THE HAGUE | 07-05-1987 | DEVINE J.J |